# EUROPEAN PATENT SPECIFICATION

(11) **EP 2 021 769 B1**
(45) Date of publication and mention of the grant of the patent: **16.05.2018**
(21) Application number: 07797877.3
(22) Date of filing: 30.05.2007
(51) Int. Cl.: G01N 21/3581, G01N 21/3577, G01N 21/85, E21B 47/10

(54) **SYSTEM FOR MONITORING A HYDROCARBON-CONTAINING FLUID FLOWING THROUGH A CONDUIT**
SYSTEM ZUR ÜBERWACHUNG EINES KOHLENWASSERSTOFFHALTIGEN DURCH EINE LEITUNG FLIESSENDEN FLUIDS
SYSTÈME POUR SURVEILLER UN FLUIDE CONTENANT DES HYDROCARBURES COULANT DANS UN CONDUIT

(30) Priority: 01.06.2006 US 809915 P
(43) Date of publication of application: 11.02.2009
(73) Proprietor: Shell Internationale Research Maatschappij B.V., 2596 HR The Hague (NL)
(72) Inventor: APPEL, Matthias, Norwich Norfolk NR7 OTE (GB); DRIA, Dennis, Edward, Houston, TX 77024 (US); EPPING, Willem, J., M., Houston, TX 77041 (US); PEARCE, Jeremiah, Glen, Houston, TX 77025 (US)
(74) Representative: Shell Legal Services IP
(86) International application number: PCT/US2007/069970
(87) International publication number: WO 2007/143474

(56) References cited:
- EP-A- 1 508 794
- WO-A-2006/011636
- US-A- 4 994 671
- AL-DOUSERI F M ET AL: "Applications of THz-time domain spectroscopy and far-infrared fourier transform spectroscopy on petroleum products analysis" CONF. DIGEST OF THE 2004 JOINT 29TH CONF. ON INFRARED AND MILLIMETER WAVES AND 12TH INTERNATIONAL CONF. ON TERAHERTZ ELECTRONICS, KARLSRUHE, GERMANY, 27 September 2004 (2004-09-27), pages 401-402, XP010796875 Piscataway, NJ, USA ISBN: 0-7803-8490-3
- TILLMAN K ET AL: "Mid-infrared absorption spectroscopy across a 14.4THz spectral range using a broadband femtosecond optical parametric oscillator" APPLIED PHYSICS LETTERS, AIP, AMERICAN INSTITUTE OF PHYSICS, MELVILLE, NY, US, vol. 85, no. 16, 18 October 2004 (2004-10-18), pages 3366-3368, XP012062956 ISSN: 0003-6951
- AL-DOUSERI FATEMAH M ET AL: "THz wave sensing for petroleum industrial applications", INTERNATIONAL JOURNAL OF INFRARED AND MILLIMETER WAVES, SPRINGER, DORDRECHT, NL, vol. 27, no. 4, 1 April 2006 (2006-04-01), pages 481-503, XP002456703, ISSN: 0195-9271, DOI: 10.1007/S10762-006-9102-Y
- GORENFLO S ET AL: "Determination of the water content in petroleum products using Terahertz Transmission Spectroscopy", VISUAL COMMUNICATIONS AND IMAGE PROCESSING; 20-1-2004 - 20-1-2004; SAN JOSE,, vol. 6120, 7 March 2006 (2006-03-07), pages 61200L-1, XP002456702, DOI: 10.1117/12.644495 ISBN: 978-1-62841-730-2

## Description

### Field of the Invention

The present invention relates to a system for monitoring a hydrocarbon-containing fluid flowing through a conduit.

The hydrocarbon-containing fluid may be a mineral hydrocarbon-containing fluid.

### Background of the invention

Hydrocarbon fluids such as oil and natural gas are obtained from a subterranean geologic formation, referred to as a reservoir, by drilling a well that penetrates the hydrocarbon-bearing formation. Once a wellbore has been drilled, the well must be completed before hydrocarbons can be produced from the well. A well completion involves the design, selection, and installation of equipment and materials in or around the wellbore for conveying, pumping, and/or controlling the production or injection of fluids. After the well has been completed, production of oil and gas can begin.

In both the construction and use of hydrocarbon production fluid flow lines, as well as processing and transportation facilities, it is often desirable to know whether corrosive materials or other contaminants are contained within the formation fluids that are traveling within the flow lines in order to select the appropriate materials for the design and construction of the pipelines and related facilities. Typical contaminants of interest include water, hydrogen sulfide (H₂S), carbon dioxide (CO₂), and asphaltenes.

Asphaltenes are commonly defined as that portion of crude oil which is insoluble in heptane, are soluble in toluene, and typically exist in the form of colloidal dispersions stabilized by other components in the crude oil. Asphaltenes are often brown to black amorphous solids with complex structures, involving carbon, hydrogen, nitrogen, and sulfur. Asphaltenes are typically the most polar fraction of crude oil, and will often precipitate out upon pressure, temperature, and compositional changes in the oil resulting from blending or other mechanical or physicochemical processing. Asphaltene precipitation can occur in pipelines, separators, and other equipment, as well as downhole and in the subterranean hydrocarbon-bearing formation itself. Once deposited, these asphaltenes generally present numerous problems for crude oil producers, such as plugging downhole tubulars, choking off pipes, and interfering with the functioning of separator equipment, all of which compound the production costs and require the need for remediation.

Other compositional information on hydrocarbon production fluids includes: a Gas:Oil ratio (GOR), a condensate gas ratio (CGR), an aliphatic/aromatic hydrocarbon ratio.

Scott et al, in US Patent 4,862,060, describe an apparatus for measuring the concentration of one material in another material, such as the concentration of water in crude or refined oil. A conduit conveying a continuous flow of the fluid mixture is formed as part of a microwave transmission line. A microwave or radio frequency range signal generator is coupled to the transmission line. A signal receiver monitors the change in frequency caused by a change in the dielectric constant of the mixture in accordance with the percentage of one fluid in the other. The signal amplitude also varies with the concentration.

The apparatus of US Patent 4,996,490 is sensitive to the dielectric constant of the mixture, but does not directly reveal the individual contributions of the various fluids in the mixture to the dielectric constant of the mixture. Hence, it requires *a priori* knowledge on the nature of the constituents of the mixture in order to, for instance, infer a value of the relative amounts of the constituents in the mixture from the dielectric constant of the mixture.

European patent 1508794 discloses a laser spectroscopy tool for determining the amount of carbon isotope of components of hydrocarbon gas mixtures and the paper "Applications of THz-Time Domain Spectroscopy and Far-Infrared Fourier Transform Spectroscopy on Petroleum Products Analysis" presented by F.M. Al-Dousera et al. at the 2004 Joint 29th International Conference on Infrared and Millimeter Waves and 12th International Conference on Terahertz Electronics discloses a system for monitoring hydrocarbon containing fluids according to the preamble of claim 1.

US Pat. 4,994,671 discloses a borehole apparatus for analyzing a formation fluid. It uses a light in the near infrared wavelength region of 1 to 2.5 microns to analyze a fluid sample. The preferred light source is an incandescent tungsten halogen lamp.

### Summary of the Invention

The invention provides a system for monitoring a hydrocarbon-containing fluid flowing through a conduit, the system comprising:
a wellbore that extends through at least a portion of an earth formation for allowing the hydrocarbon-containing fluid to flow from a producing zone of the earth formation in said wellbore;
a conduit fluidly connected to the wellbore; and
a measurement assembly comprising:
   a terahertz probe wave generator arranged to generate a terahertz probe wave with a frequency between about 50 GHz and 30 THz;
   a terahertz probe wave detector arranged to detect at least a portion of the terahertz probe wave and generate a detection signal;
   a terahertz probe wave path that extends between the terahertz probe wave generator and the terahertz probe wave detector, whereby at least a section of the terahertz probe wave path extends into the conduit;
   wherein the hydrocarbon containing fluid is a mineral hydrocarbon containing fluid and the system further comprises:
      a processor programmed to extract from the detection signal at least one fluid parameter selected from the group consisting of asphaltene content, asphaltene type, water content, hydrogen sulfide content, sulfur dioxide content, gas to oil ratio, and condensate gas ratio;
      a valve on the conduit capable of controlling the flow of the mineral hydrocarbon containing fluid through the conduit; and
      a controller arranged to control the valve, whereby the controller is coupled to the terahertz probe wave detector and programmed to control the valve in response to the detection signal.

### Brief Description of the Drawings

The invention will now be illustrated by way of examples and with reference to the accompanying drawings, wherein:
FIG. 1 illustrates a schematic representation of a fluid monitoring system for use in embodiments of the present invention;
FIG. 2A illustrates a plan view of a monitoring system in accordance with an embodiment of the present invention, disposed on an outer surface of a fluid flow conduit;
FIG. 2B illustrates an enlarged plan view of a part of the monitoring system of FIG. 2A;
FIG. 3. illustrates a schematic diagram of a terahertz wave spectrometer assembly for use in the embodiment illustrated in FIG. 2A;
FIG. 4A schematically illustrates how an optical switch device, which forms part of a terahertz wave generator such as provided in the terahertz wave spectrometer of FIG. 3, generates a terahertz wave;
FIG. 4B schematically illustrates how an optical switching device, which forms part of a terahertz wave detector such as provided in the terahertz wave spectrometer of FIG. 3, detects a terahertz wave;
FIG. 5A illustrates a view of a monitoring system in accordance with an embodiment of the present invention, disposed on an inner surface of a fluid flow conduit;
FIG. 5B illustrates an enlarged view of the monitoring system of FIG. 5A;
FIG. 6A illustrates a schematic diagram of a terahertz wave spectrometer assembly for use in the embodiment illustrated in FIG. 5A;
FIG. 6B illustrates a schematic drawing of a composite fluid flow conduit with embedded fibers and conductors for transmitting light pulses and command signals;
FIG. 7. is a schematic illustration of a sub-sea hydrocarbon assembly comprising a is plurality of monitoring systems employing embodiments of the present invention;
FIG. 8. is a schematic illustration of possible remote interrogation vehicles in relation to a pipeline, employing embodiments the present invention;
FIG. 9. is a schematic illustration of possible remote interrogation using an aircraft in relation to a fluid flow conduit, employing embodiments of the present invention;
FIG. 10 is a schematic illustration of a coiled composite tubing having embedded conductors and a plurality of self contained measurement assemblies disposed along and within the tubing, employing embodiments of the present invention;
FIG. 11 is a schematic illustration of a multilateral well configuration provided with monitoring systems; and
FIG. 12 schematically illustrates an asynchronous optical sampling device.

In these drawings, like parts and components have been numbered with like reference numbers.

### Detailed Description

Applicants have created a system that uses terahertz waves to monitor hydrocarbon containing fluids, such as mineral hydrocarbon containing fluids, flowing through a fluid conduit, such as a pipeline, and methods of using such assemblies in both subterranean and above-ground environments. Infrared waves typically comprise electromagnetic radiation, and have a frequency within an infrared frequency domain between about 50
GHz and 200 THz. The infrared frequency domain comprises a so-called terahertz frequency domain, spanning in the far-infrared from about 50 GHz to about 30 THz, and a mid-infrared frequency domain from about 30 THz to about 200 THz.

Unlike frequencies in the microwave or radio frequency domain, the infrared waves in the frequency range from about 50 GHz to about 200 THz allow for obtaining information about the molecular structure of the fluid, because it includes various molecular vibration modes. Such information directly relates to composition of the fluid, in particular when a frequency is probed that uniquely corresponds to a certain vibration mode of a specified molecule.

The infrared frequency range moreover allows for spectroscopic measurements to be carried out, such that no *a priori* knowledge of the type or phase of the contaminant or constituent in the fluid is required. Probing in this frequency range does not rely on electrical conductivity of the fluid and hence it works in liquids, gases, solids, and in multiphase fluids comprising any combination of these phases mixed together.

Amongst further advantages is that fluids of electrically conductive nature may be relatively transparent to electromagnetic radiation in this frequency range compared to electromagnetic radiation in the microwave or radio frequency range, because the latter suffers from the so-called skin depth. Moreover, the monitoring as described herein does not require isolation of a fluid sample and subsequently analyzing it. Instead, it allows for essentially continuous and/or real-time monitoring of the fluid flowing through the conduit. It allows for monitoring during production of hydrocarbon containing fluids or during refining of hydrocarbon containing fluids.

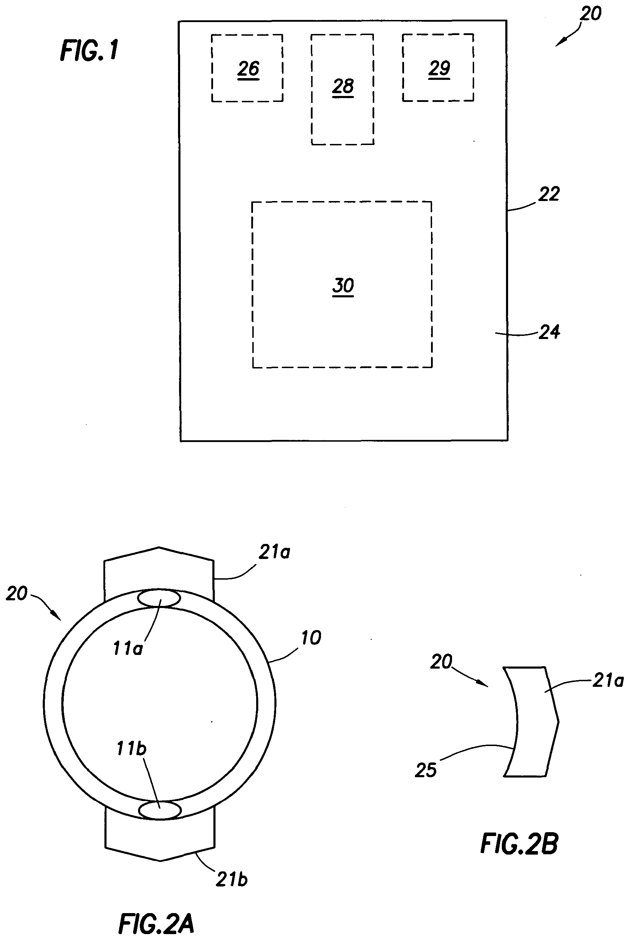

Turning now to the figures, FIG. 1 is a schematic diagram of one embodiment of a monitoring system 20. The assembly includes a chamber 24 within a housing 22, containing an infrared frequency domain measurement system 30. Monitoring system 20 may also contain a transmitter 26 for sending monitoring signals from the monitoring system 20 to a remote receiver. The transmitter 26 may be located on or in the chamber 24. In some embodiments, the transmitter 26 may be in electrical communication with the infrared frequency domain measurement system 30 and/or external sensors (not shown).

In such embodiments, the transmitter 26 may receive detection signals from the infrared frequency domain measurement system 30 and/or the external sensors (not shown) and sends them directly to a receiver on or near the surface. In some embodiments, a processor 29 is in electrical communication with at least the transmitter 26. In general terms, the optional processor 29 may receive detection signals from the infrared frequency domain measurement system 30 and/or the external sensors, process the detection signals into a conditioned signal, and sends the conditioned signal to the transmitter 26. The transmitter 26 then sends the monitoring signal, based on or formed by the conditioned signal, to a remote receiver. The processor 29 may be located on the housing 22, or in the chamber 24.

In one embodiment, the transmitter 26 continuously sends a monitoring signal to the receiver, for example, a signal corresponding to real-time measurements of the water content, the oil/gas ratio, or the hydrogen sulfide content of a hydrocarbon fluid within a fluid conduit, as obtained by measurement system 30. In other embodiments, the transmitter 26 only sends a monitoring signal to the receiver when a certain event occurs, for example, once the water content or oil/gas ratio reaches a certain level. In still other embodiments, the transmitter 26 sends a monitoring signal to the receiver at predetermined intervals.

The monitoring system 20 may also contain a receiver 28 for receiving control signals from a remote operator or control device. The optional receiver 28, which may also be disposed within or outside of the chamber 24, may be in electrical communication with the infrared frequency domain measurement system 30, and/or any one of the transmitter 26, and the processor 29, when provided. The receiver 28 can receive a control signal from the operator and/or control device, and pass the control signal to another component, causing an action within the monitoring system 20. For example, the receiver 28 may receive a control signal to turn on or to turn off the terahertz analysis measurement system 30. Thus, the receiver 28 may enable the operator and/or control device at the surface to remotely control one or more functions of the monitoring system 20.

Monitoring and/or control signals may be sent to and from the monitoring system 20 using any suitable method including any suitable method known in the art. For example, if the conduit is underground, the monitoring system 20 may be linked to a receiver and/or transmitter on or near the surface via one or more cables. The cables may be disposed inside of the conduit, outside of the conduit, or within a wall of the conduit. Alternatively, the monitoring system 20 may communicate with the surface using a wireless communication system. Suitable wireless communication methods include, for example, mud-pulse telemetry, acoustic, and electromagnetic techniques. It should be understood that any communication technique, wireless or not, may be used to facilitate signal transfer between the monitoring system 20 and a receiver at or near the surface, or remote from the assembly 20. Examples of suitable communication systems are known in the art.

Power for operating the various electronic components of the monitoring system 20 may be supplied, for example, by a power source, such as a battery, located in or near the chamber 24, a turbine powered by fluid flowing within the fluid conduit, or other suitable powering means known in the art.

The various components of the monitoring systems 20 described herein may be manufactured from any material that can withstand prolonged exposure to the environment in which the assembly will be placed. Suitable materials include polymers and metals. Polymeric materials may be used alone or in combination, either with or without reinforcement. Suitable polymeric materials include but are not limited to polyurethanes, such as a thermoplastic polyurethane (TPU), ethyl vinyl acetate (EVA), thermoplastic polyether block amides, thermoplastic olefin, silicones, polyethylenes, polyimides, acetal, and equivalent materials. Reinforcement, if used, may be by inclusion of glass or carbon graphite fibers or para-aramid fibers, such as the KEVLAR™ brand sold by DuPont, or other similar method. Suitable metals include but are not limited to steel, stainless steel, and aluminum, for example. Also, both polymeric and metallic materials may be used to fabricate the components of the monitoring systems 20. Other suitable materials will be apparent to those skilled in the art.

The monitoring system 20 may be associated with a fluid conduit as appropriate. As used herein, the term "associated with a fluid conduit" is meant to contemplate that the assembly 20 may be coupled exterior to, on the interior of, proximate to, or remote to a fluid conduit. As used herein, the term "fluid conduit" means a closed conduit, such as a pipeline or other substantially tubular member, an open conduit such as an aqueduct, or combinations thereof, for use in transporting liquids, gases, slurries, and other fluids. Such fluids typically include mineral hydrocarbons and fluids containing mineral hydrocarbons, and optionally fluid containing mineral hydrocarbons and associated contaminants such as water, polar molecules, asphaltenes, and the like.

A mineral hydrocarbon fluid may, for the purpose of the present specification, be understood to comprise not only mineral hydrocarbon containing fluids in crude form but also mineral hydrocarbon containing refined fluids.

In the embodiment illustrated in FIGS. 2A and 2B, the monitoring system 20 is adapted to be disposed on the outer surface of a fluid conduit 10, such as a round or curved pipeline or drill string. The conduit may be fluidly connected to a source of a mineral hydrocarbon-containing fluid, for instance in the form of an artificial or natural reservoir, or a refinery.

The monitoring system 20, in the present embodiment disposed on the exterior of the fluid conduit, preferably comprises a first chamber with an infrared probe wave generating assembly 21a comprising an infrared probe wave generator and a second, opposite, chamber with an infrared probe wave detecting assembly 21b comprising an infrared probe wave detector, and at least two infrared probe wave-transparent windows 11a and 11b, as will described in more detail below.

Alternatively, and equally acceptable, monitoring system 20 may comprise assemblies 21a and 21b oppositely disposed on the outer surface of a fluid conduit element that is itself made of an infrared probe wave-transparent material, thus removing the need for the presence of the transparent windows 11a and 11b.

Of course, the infrared probe wave detecting assembly 21a and detecting assembly 21b do not have to be arranged opposite each other relative to the conduit. They may, for instance, also be arranged in an upper part or a lower part or a side part of the conduit and/or be arranged for measurement in reflection mode rather than transmission mode. The probe waves, however, should somehow interact with the fluid, and one way of achieving this is to let at least a section of the infrared probe wave path extend into the conduit where the fluid flows.

As illustrated by FIG. 2B, one side 25 of the chamber 21a (and 21b) has a concave shape that substantially correlates to the exterior of the fluid conduit 10. The remaining sides of the chamber 21a may have any shape as appropriate in order to facilitate placement of the monitoring system 20 in a desired operating location. For example, the monitoring system 20, comprising chambers 21a and 21b, may be adapted to be disposed on a fluid pipeline running above or below the surface, or on a drill pipe, drill string, or drill collar.

As stated above, the infrared frequency domain comprises the so-called terahertz frequency domain and the mid-infrared frequency domain. Particularly, the measurements may use a terahertz domain analyzing device for analysis of the fluid as it flows through the conduit. The terahertz domain analyzing device may comprise a terahertz radiation source and detector. Embodiments of the terahertz domain analyzing device may comprise or essentially consist of a terahertz domain spectrometer. The measurements of the fluid using the radiation in the terahertz radiation domain may be spectroscopic measurements.

Applicants are not aware of any single infrared probe wave source or generator practicable for the intended purpose of monitoring mineral hydrocarbon-containing fluids flowing in a conduit, that is capable of generating the entire spectrum from about 50 GHz to about 200 THz. Hot objects (black-body radiators) can radiate strongly in the range mid-infrared range from about 30 THz and upwards. For the lower frequency range of the infrared domain, between about 50 GHz and 30 THz, a terahertz wave spectrometer is disclosed below as one example.

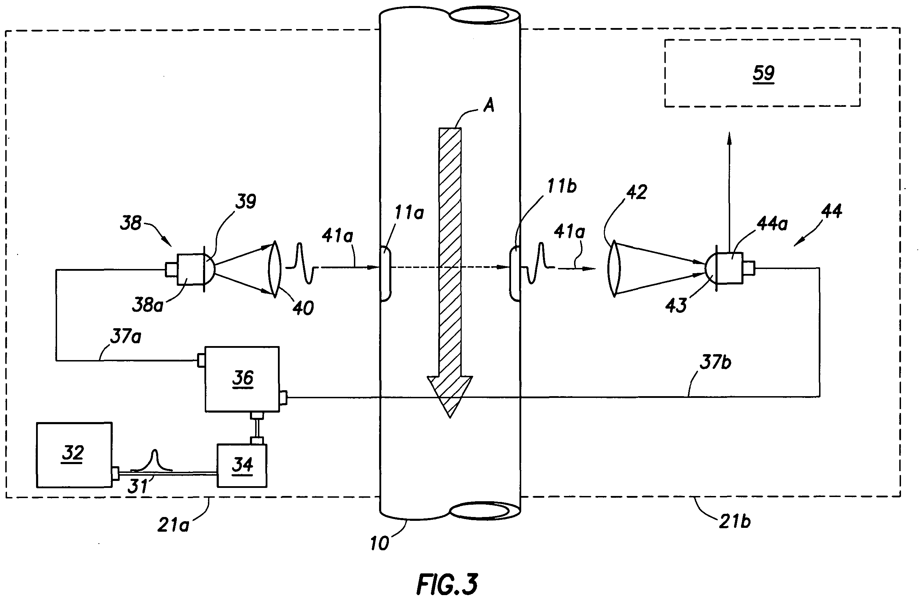

FIG. 3 illustrates the general structure of an infrared frequency domain measurement system in the form of a terahertz analysis measurement system such as a terahertz time-domain wave spectrometer (THz-TDS) system, referred to hereinafter as the measurement assembly 30. The terahertz wave spectrometer system shown therein is part of the monitoring system, and comprises the terahertz generating assembly 21a and the terahertz detecting assembly 21b. Assemblies 21a and 21b comprise a pulsed light source 32 for generating an excitation light pulse beam 31, an optional group velocity dispersion compensation, and optical fiber coupling assembly 34, a control box with an optical delay device 36, a terahertz probe wave generator 38, and a terahertz probe wave detector 44, as well as fiber optic cables 37a and 37b.

System 30 may also optionally include a spectroscopic processor (not shown), or other appropriate hardware capable of processing the frequency domain information obtained as will be described herein by taking the Fourier-Transform of the waveform measured in the time domain, using a computer or other suitable Human-Machine Interaction (HMI) device.

The light from the optical delay device 36 is guided by and travels through two (or more) fiber optic cables 37a and 37b, which serve to provide optical communication between assemblies 21a and assemblies 21b. The terahertz wave generator 38 is for generating a terahertz probe wave by using the excitation light pulses 31 guided by the optical delay device 36. The terahertz wave detector 44 is for detecting the terahertz probe wave that has passed through the fluid flow stream A and that is guided along the terahertz wave light path 41a, thereby outputting a terahertz wave detection signal. The spectroscopic processor 29 is for processing the detection signal from the terahertz wave detector 44, as necessary.

As an example of the pulsed light source 32, a pulsed laser device, for instance a femto-second (fs) pulsed laser device, is used. Suitable pulsed light sources 32 may include SiGe/Si lasers, Ti/sapphire lasers, and Femtolite ultrafast fiber lasers based on doped (e.g., Erbium-doped or Yb-doped) fiber oscillators, such as are available from IMRA (Institut Minoru de Recherche Avancée) America, Inc. (Ann Arbor, MI). Preferably, the pulsed light source 32 is a fiber-coupled femtosecond laser system, or a femtosecond laser system capable of being directly coupled to optical fiber(s), as these systems directly couple the pulse to the optical fibers (37a, 37b) and are compact in size.

The pulsed laser system may generate an excitation light pulse having a pulse width less than about 1 picosecond (ps; one trillionth (10⁻¹²) of a second). For the purpose of the present specification, pulse width is measured at 50 % of the peak power of the pulse. Typically the pulse width may be more than about about 10 femtoseconds (fs; 10⁻¹⁵ second), preferably in a range from about 10 femtoseconds to about 900 femtoseconds, more preferably in the range from about 10 fs to about 500 fs, and more preferably in the range from about 10 fs to about 300 fs, including about 20 fs, about 30 fs, about 40 fs, about 50 fs, about 60 fs, about 70 fs, about 80 fs, about 90 fs, about 100 fs, about 120 fs, about 140 fs, about 160 fs, about 180 fs, about 200 fs, about 225 fs, about 250 fs, about 275 fs and about 300 fs, as well as values falling within ranges of these pulse width ranges, e.g. from about 95 fs to about 115 fs. The pulsed laser system may produce excitation light pulses having a pulse energy ranging from about 1 mJ to about 100 mJ or more, as appropriate. The excitation-light optical system also includes an optical delay device 36, coupled to the pulsed light source 32 via fiber-optic cables. Optical delay device 36 may be any suitable such device known in the art, such as the terahertz control devices available from Picometrix (Ann Arbor, MI), and may be as simple as a mirror mounted on a translation stage. Such control devices may optionally include additional mirrors and other appropriate assemblies necessary to control the relative pulse propagation path length between the transmitter and the receiver, including a fiber splitter or beam splitter for use before the femtosecond light pulse train proceeds towards the terahertz wave generator 38. Suitable fiber-coupled transmitters/terahertz wave generators 38 for use with the present invention can be obtained from Picometrix (Ann Arbor, MI).

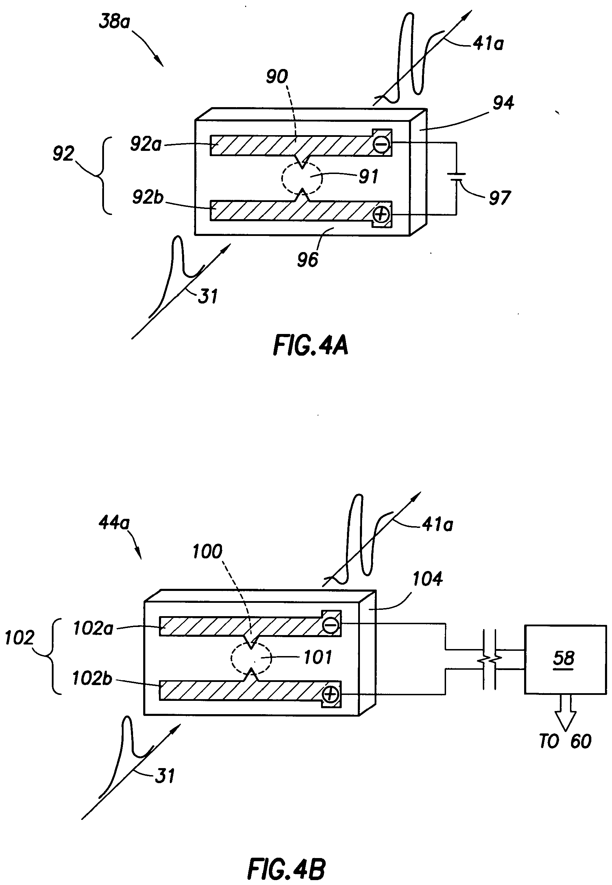

According to the present embodiment, an optical switching device 38a, shown in FIG. 4A, is used as the terahertz wave generator or transmitter. The optical switching device 38a is typically constructed from a substrate 94 and a photoconductive film or layer 96. The substrate 94 may be made of semiconductor, such as gallium-arsenide (GaAs), which has a high speed response. The photoconductive film or layer 96 may also be made of a low-temperature-grown GaAs, for example, formed on the substrate 94. Other suitable materials for the substrate 94 may include but are not limited to silicon, InAs, InGaAs, InAs/GaAs, GaN, GaAs/GaN/GaAs substrates, and the like. Parallel transmission lines 92 are formed on the photoconductive film or layer 96. While the transmission lines 92 are illustrated to be parallel, they are not limited to this design, and can be of any others suitable shape, include bow tie shaped. The parallel transmission lines 92 are constructed from a pair of transmission lines 92a and 92b. A single optical switch portion 90 may be provided in the center of the parallel transmission lines 92. The optical switch 90 is typically made from a small dipole antenna. The dipole antenna is typically DC biased in order to create a static electric field across the antenna. A gap 91 may formed in the center of the optical switching device 38a. The gap 91 has a size of several microns, for example. A proper amount of bias electric voltage is applied through the gap 91 by a direct-current bias power supply 97.

With the above-described structure, the optical switch 38a functions as described below. When a laser light pulse 31, which has an energy greater than the band gap of the semiconductor, falls incident on the gap 91 as an optical pulse, free carriers are generated in the semiconductor. As a result, an electric current flows in a pulse shape. The pulse-shaped electric current generates a pulse-shaped terahertz probe wave, 41a. Terahertz radiation generated and used in the system 30 is in the frequency range from about 50 GHz to about 30 THz, more pronouncedly from about 0.1 THz to about 10 THz. The equivalent wavelengths, in vacuum, lie within a broader range of about 0.01 mm to about 6 mm and within a more pronounced range of about 0.03 mm to about 3 mm. Preferably, the used part of the generated terahertz domain spectrum is between 0.31 THz and 10 THz, or between 0.31 THz and 3 THz. It is conceived that, within the terahertz part of the infrared spectrum, the higher the frequency the lower the penetration depth of the terahertz radiation in the fluid.

Returning to FIG. 3, an output lens 39 is provided in the terahertz wave optical path 41a at one side of the optical switch 38a, where the terahertz probe wave is generated. Typically, the output lens 39 (and input lens 43, described below), are chosen to be of a material such that its index of refraction (η) does not differ too substantially (e.g., by more than about 0.5) from the material of the substrate, nor does it absorb as much as the material of the substrate. For example, when the substrate 94 is GaAs, the lens 39 is typically silicon or a silicon-like material, because its index of refraction (η_{Si}=3.4) does not differ appreciably from that of the GaAs substrate (η_{GaAs}=3.6). Additionally, in this example, using a material like silicon that has a similar index of refraction reduces Fresnel reflections between the lens and the substrate. Silicon is the preferably material for use as the lens 40 over GaAs because, while a GaAs lens can substantially match the refractive index, GaAs absorbs terahertz radiation more than silicon, making GaAs less preferable.

While not included herein, one or more mirrors (which may be of metal or any other suitable, highly-reflective material, such as gold or aluminum) may also be provided in the terahertz wave optical path 41a. The mirrors may be used for converting the terahertz wave, which has been generated by the terahertz wave generator 38 and which has passed through the output lens 40, into substantially a parallel, collimated light, as necessary. Optionally, or in addition to functioning to collimate the terahertz radiation, mirrors may be included within the present assemblies in order to guide the terahertz pulses. Such mirrors can be any suitable mirror known in the art, including paraboloid mirrors, such as an on-axis or off-axis paraboloidal mirror. Further, one or more additional pairs of lens may be used in system 30 in order to focus the beam down to a smaller, or desired, spot size.

With continued reference to FIG. 3, having passed through lens 40, the terahertz wave optical path 41 continues towards the exterior of conduit 10. As illustrated in FIG. 3, when conduit 10 is made of a material substantially non-transparent to terahertz waves, in order to monitor the fluid stream within the conduit, the conduit necessarily further comprises windows 11a and 11b (or other suitable, THz-transparent elements) in the fluid conduit itself which are substantially parallel to each other. Windows 11a and 11b are preferably comprised of a material that is transparent to terahertz waves, such as fiberglass or plastic PEEK (PolyEtherEtherKetone). In other embodiments of the present invention, an element of the fluid conduit itself is transparent to terahertz waves, so as to allow for the attachment of several monitoring systems 20. In accordance with this aspect, the fluid conduit, which is typically metal or some other appropriate material, is coupled to a terahertz-transparent pipe element intermediate two portions of fluid conduit, *via* metal-to-plastic couplings or other appropriate coupling means known in the art, including threads, tapered threads, and transition fittings. Suitable materials for the terahertz-transparent pipe element include THz-transparent plastics such as PEEK and fiberglass, such as those available from Star Fiber Glass Systems (San Antonio, TX).

Having passed through first window 11a in conduit 10, the terahertz wave then passes through fluid stream A, such as a hydrocarbon stream, which passes substantially perpendicular to the terahertz wave optical path 41a. The fluid stream A is a target whose characteristics are desired to be measured by the spectrometer. A spectroscopic measurement in time-domain may be made by measuring the detection signal as a function of delay time imposed in optical delay device 36.

Examples of the fluid stream A may include a gas, a liquid, or a combination of two or more gases or liquids, suitable liquids including water, hydrocarbons, asphaltenes, and the like. As used herein, the term "hydrocarbon" refers to heavy oils, light oils, oil-based mud, and mixtures thereof. Similarly, as used herein, asphaltenes refers generally to those heavy, polar fractions found in crude oil or hydrocarbons, and which can vary in complexity and consist of associated systems of polyaromatic sheets bearing alkyl side chains, as well as the heteroatoms O, N and S as well as the metals V, Ni and Fe.

On the opposite side of transparent window 11b, an input lens 42 is provided in the terahertz wave optical path 41a. The input lens 42 is for focusing the terahertz wave 41a, which has passed through the fluid stream A, onto an optical switching device 44a via input lens 43. The optical switching device 44a constitutes the terahertz wave detector 44, such as from Picometrix (Ann Arbor, MI). The input lens 43, similar to output lens 39, can be from silicon lenses, for example, as well as other suitable materials known in the art.

While not illustrated herein, the terahertz spectroscopic system described herein may optionally be provided, instead of or in addition to the optical delay device 36, with a variable optical delay translation stage to vary the optical path length of the infrared probe wave from the generator to the detector. Such variable optical delay translation stages are for setting or adjusting the difference between the arrival of the probe pulse and of the excitation light pulse at the detector switching device 44a. The optional variable optical delay translation stage may be any suitable translation stage, such as the VP-25X translation stage or UlLTRAlign™ series translation stage available from Newport (Irving, CA). Typically, translation stages include a movable drive, which may be motorized or manual, and may be linear or vertical. Suitable translation stages for use herein may also include a ball-screw drive, as appropriate, and, optionally an optical delay controller for driving the translation stage and to control its position. By driving (controlling) the position of the translation stage along a predetermined distance, the optical delay controller can perform control operations to change and set the length of the optical path of the probe light, thereby changing and setting the difference between the excitation light irradiation timing (terahertz wave generating timing) and the terahertz irradiation timing (terahertz wave detecting timing). Typically, translation stages can move distances ranging from about 1 mm to about 10 cm, depending upon the application and the size of the translation stage itself.

Additional objective lens 40 and 42 may be further provided in the system 30 described herein, as necessary. Objective lens 40 and 42 may be of any appropriate shape, such as hemispherical, extended hemispherical, collimating, or hyperhemispherical, and may be of any appropriate lens material, including glass, plastic (e.g., polymers), silicon, quartz, CaF₂, ZnSe, Ge, combinations thereof, and the like.

Referring now to FIG. 4B, the optical switching device 44a, may be used as the terahertz wave detector 44. The optical switching device 44a may have the same structure as the optical switch 38a. However, the gap 101 of the switching device 44a is not connected to the direct current bias power supply 97, but is connected to the spectroscopic processor 58, which can function to perform a fast Fourier Transform on the pulse. Additionally, receiver structure 44 is very similar to the transmitter 38, the primary difference being that the DC bias present with the transmitter is replaced with a current meter or similar device within the receiver. In this way, when the femtosecond pulse 41a arrives at the detector 44, the resistivity of the GaAs reduces the duration of the laser pulse. This in turn opens a short time window when the terahertz electric field at the antenna leads can induce a current, which is proportional to the convolution of the electric field with the time window. The width of the time window limits the measurable bandwidth of the terahertz (THz) pulse, because for higher frequencies that will oscillate several times within the sampling window, the current will average out to zero.

With this structure, the optical switching device 44a functions as described below. The terahertz electromagnetic wave is focused by the input lens 43 onto the dipole antenna 100 on the optical switch 44a. If the light current flow pulse from the objective lens 42 excites the gap 101 to generate carriers simultaneously when the terahertz electromagnetic wave falls incident on the dipole antenna 100, an electric current flows to be supplied to the spectroscopic processor 58. The amount of the electric current is proportional to the amplitude of the terahertz electromagnetic wave that reaches the optical switch 44a at the instance that the probe light pulse excites the gap 101.

Again referring to FIG. 3, as illustrated therein, the system may also comprise a control unit 59, which may be housed at an appropriate location within assembly 20, or may be housed remotely in control housing station with or in conjunction to a control unit for controlling and operating monitoring system 20. According to aspects of the present embodiments, the control unit may contain a spectroscopic processor, which may include one or more of the following optional components, as necessary or desired: a current-to-voltage conversion amplifier, such as a transimpedance amplifier, and an analyzing device. Control unit 59 may also control the optical delay line, as necessary.

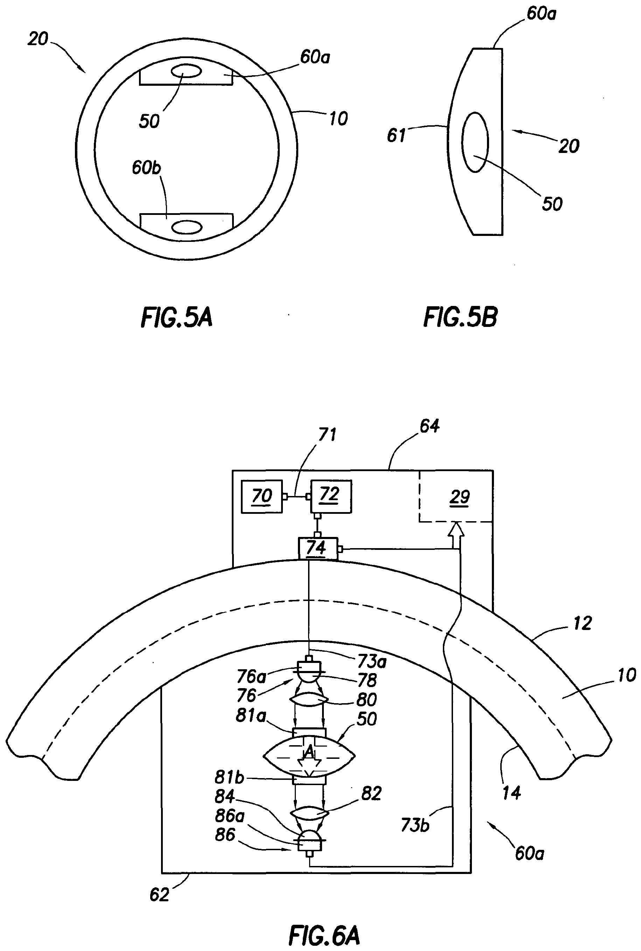

Alternatively, the monitoring system 20 may be disposed on the inside surface of a round or curved fluid conduit, such as, for example, a production pipeline 10, as illustrated in FIGS 5A and 5B. As shown in FIG. 5A, while only one assembly is necessary for fluid monitoring, it is preferred that there be two or more assemblies, such as spaced apart, parallel oriented measurement assemblies 60a and 60b. In this manner, more accurate analysis of the fluid flowing through the conduit may be made, for example in the instance where there is an upper hydrocarbon layer and a lower, aqueous layer in the fluid. Optionally, other assemblies may be placed as desired around the circumference of the inside surface of the fluid conduit, allowing, for example, the monitoring and analysis of the central portion of the fluid.

Referring to FIG. 5B, one side 61 of the assembly 60a may have a convex shape that substantially corresponds to the interior of the conduit 10. The remaining sides of the assembly 60a may have any shape so as to facilitate placement and fluid flow around the monitoring system 20 when placed in a desired operating location. As also illustrated in FIG. 5B, assemblies 20 may preferably have at least one orifice 50, extending substantially completely therethrough, so as to provide a fluid sample stream suitable for analysis.

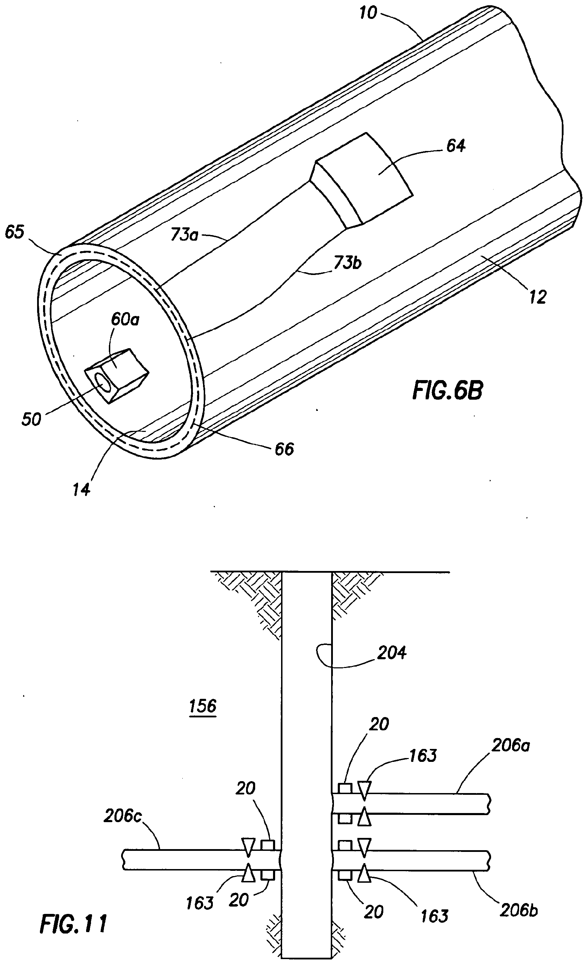

FIGS. 6A and 6B illustrate a particular embodiment of a monitoring system 20, as described with reference to FIGS. 5A and 5B. The sensor apparatus 60a, as detailed in FIG. 6A, includes many of the same features described with respect to the schematic diagram of FIG. 3, including a pulsed light source in the form of a femtosecond pulsed laser system 70, an optional group velocity dispersion compensator and optical fiber coupling 72 coupled thereto, and a control box with a least one optical delay line 74. Control box 74 is operably connected to both a terahertz wave generator 76 and a terahertz wave detector 86 by way of optical fibers 73a and 73b, respectively. In a particular embodiment, the assembly 60a comprises a housing 62 containing a terahertz spectrometer described above and illustrated in FIG. 6A, as well as an orifice 50 extending through a portion of the assembly, orifice 50 providing a fluid sample stream for analysis by the terahertz spectrometer housed within the assembly 60a. Orifice 50 also comprises at least two, spaced apart terahertz transparent elements 81a and 81b, allowing for the monitoring of the fluid stream within the fluid conduit. As also illustrated in FIG. 6A, given the size and nature of several of the components of a system in accordance with this embodiment, the assembly may further comprise housing module 64 that is associated with (e.g., coupled to) the exterior wall 12 of conduit 10. Housing module 64 acts to contain the pulsed laser system 70, the group velocity dispersion compensator and optical fiber coupling assembly 72 coupled to the pulsed laser system 70 via line 71 (such an optical cable or fiber), and a control box 74 with a least one optical delay line. As further illustrated in FIG. 6A, control box 74 is operably connected to both a terahertz wave generator 76 and a terahertz wave detector 86 by way of optical fibers 73a and 73b, respectively, which extend through the wall of conduit 10 to the sensor apparatus 60a mounted to the interior wall 14 of the conduit. Module 64 may be constructed of any suitable material, such as metal, fiberglass, or a number of known polymeric materials.

The individual measurement of a terahertz spectrum of the fluid stream through orifice 50 using a sensor assembly such as illustrated in FIG. 6A is now broadly described. Generally speaking, the fluid flow stream may be monitored with a very high time resolution, because the individual measurement of the terahertz spectrum of the fluid stream is first compared to the propagation time of flow elements across the sampled volume. In order to acquire a single sample of a terahertz waveform, averaged measurements are made over multiple terahertz pulses which originate from the femtosecond pulsed laser system 70 shown in FIG. 6A. Laser system 70 generates a femtosecond laser pulse train, which propagates through an appropriate conveyance 71, such as an optical fiber or cable, to optical fiber coupling assembly 72 that compensates for group velocity dispersion that may result from the excitation light train traveling through optical fibers. This velocity dispersion may take the place of diffraction gratings or prisms, as known in the art. The pulse is then fiber-coupled into control box 74 containing an optical delay line that may control the pulse arrival time between the transmitter and the receiver. Inside control box 74, the laser pulse beam propagates through a fiber beam splitter (not shown), which sends half of the laser light directly to the transmitter 76 by way of optical fiber line 73a, where terahertz radiation is then emitted from optical switching device 76a by way of output lens 78. The generated terahertz radiation wave is then collimated by lens 80 into and through first window 81a, which is comprised of material substantially transparent to terahertz waves (e.g., fiberglass or plastics, such as PEEK). The terahertz wave then travels through the fluid stream A flowing within and through orifice 50, and then through a second window 81b that is also substantially transparent to terahertz waves. The terahertz wave is then focused by lens 82 into input lens 84, and then to terahertz receiver 86. From receiver 86, the wave path conveying spectral data of the fluid stream A is conveyed back to control box 74 within housing 64 via an appropriate information conveyance, such as a wire or a separate optical fiber (not shown), using appropriate circuitry as known to those of skill in the art. The optical fiber line 73b, meanwhile, sends a laser pulse to the receiver 86 in a manner as described above.

The other half of the light from the beam splitter within control box 74 is emitted into free space, where it may be reflected off a mirror or series of mirrors on the optical delay line and is then again coupled into optical fiber. This laser pulse beam then travels to the receiver, where the electric field of the terahertz radiation is measured. The optical delay line inside the control box increases the time delay between the pulse arriving at the transmitter and the pulse arriving at the receiver 86 where the electric field is averaged. By incrementally increasing the delay, discrete samples of the terahertz electric field may be collected and a complete waveform may be mapped out over a window in time. The sampling period is only limited by the temporal width of the femtosecond pulse from laser 70. In short, control box 74 allows for the control of the optical delay lines. Processing of the information obtained on the fluid stream A may be done by processor 29, as discussed previously in FIG. 1, using fast Fourier Transform or other suitable interpretation methods to provide analytical data.

As illustrated in FIG. 6B, a potential relationship between housing module 64 coupled to the exterior wall 12 of conduit 10 and a measurement assembly 60a coupled to the interior wall 14 of a conduit 10 is shown. In accordance with this aspect of the embodiment, composite conduit 10 has electrical and/or optical conductors 66 embedded within the wall 65 of fluid conduit 10 during the manufacturing process for forming the conduit. Measurement assemblies, such as assembly 60a, may be disposed along the conduit on an internal wall, as illustrated in FIG. 6B. However, as described previously, measurement assemblies as described herein may be disposed along the conduit on an internal wall of the conduit 10, on an external wall of the conduit 10, embedded in a wall 65 of conduit 10, or in a combination of such manners of disposing. The conductors 66 may be disposed substantially longitudinally within the wall of conduit 10, although such conductors may be at least partially disposed substantially longitudinally within or around internal surface 14 of conduit 10, or external surface 12 of conduit 10, as appropriate. Alternatively, the conductors 66 may be spirally wrapped within the wall of conduit 10. Conductors 66 may, for instance, be optical cables 73a and 73b, providing optical communication between assembly 60a and housing 64. Alternatively, conductors 66 may comprise electrical conductors, which in turn may be connected to a radio frequency (RF) transceiver (not shown) in a controller, which may be included within housing 64, or be housed separately and/or remotely. In accordance with this aspect, power and command signals may be transmitted through the conductors, which are capable of acting as RF antennas. The signals may be detected by the monitoring systems 20, such as assembly 60a, spaced along the conduit. Measurement stations (not shown) may receive and convert the RF (or other suitable frequency) signals to power and command instructions for taking data from sensors in the measurement assemblies (e.g., 60a). This data may then be transmitted via a radio frequency signal that is received by the electrical conductors 66 and decoded by the controller, according to programmed instructions. In this way, the signals from remotely spaced measurement stations along the conduit may be suitably encoded and identified, using techniques known to those of skill in the art, so as to be able to determine and/or identify the measurement stations associated with each data signal.

The devices, systems, assemblies and methods provided herein may form part of a method of producing a mineral hydrocarbon containing fluid from an earth formation, the method comprising:
providing a wellbore extending through at least a portion of the earth formation;
producing the mineral hydrocarbon containing fluid from the producing zone and allowing it to flow though a conduit fluidly connected to the wellbore;
generating an infrared probe wave having a frequency between about 50 GHz and 200 THz;
irradiating the mineral hydrocarbon containing fluid flowing through the conduit with the infrared probe wave, thereby causing the fluid to interact with the infrared probe wave;
detecting the infrared probe wave after its interaction with the fluid;
generating a detection signal; and
monitoring the detection signal.

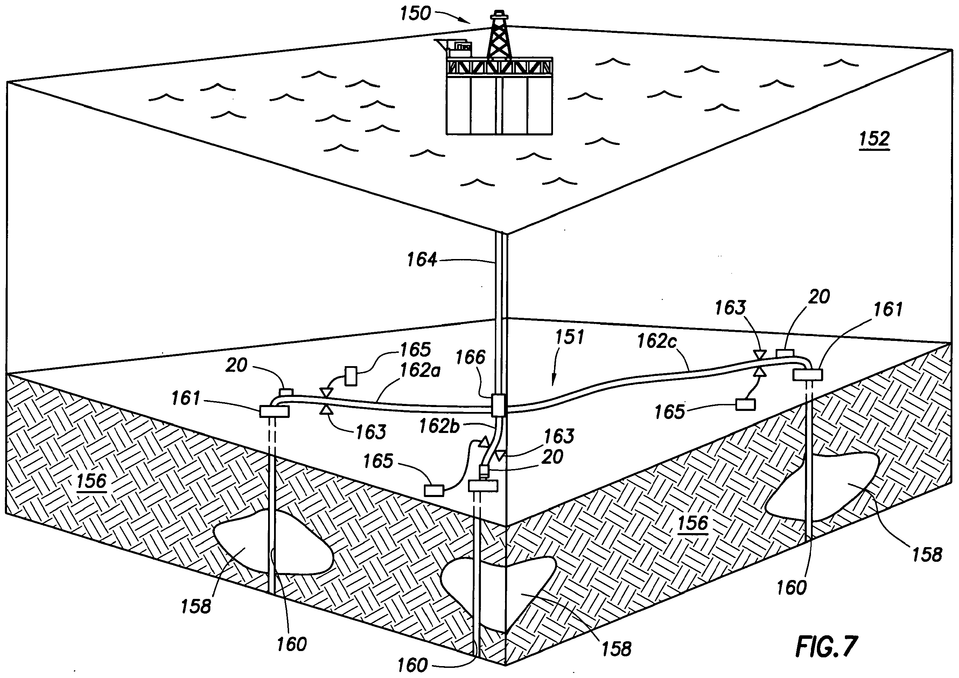

FIG. 7 illustrates an application of assemblies and systems, provided by the present invention, in a sub-sea environment. Typically, sub-sea production involves a number of remote subsurface wells 160 that extend within subterranean formation 156 below the sea floor 151. These wells 160 produce hydrocarbons from hydrocarbon-producing formations, or zones, 158, and are fluidly connected with fluid conduits 162a, 162b, 162c, typically in the form of pipelines, running along the ocean floor or sea bed 151 via a wellhead 161 or other similar assembly. The fluid conduits 162a, 162b, 162c fluidly interconnect at a production tree 166. In accordance with the typical operation shown therein, a surface production platform 150 resides on the surface of ocean environment 152, and is connected with the production tree 166 by umbilical means 164. Each of the conduits 162a-c form part of monitoring system 20 or have at least one monitoring system 20 mounted exterior to, interior to, or both exterior to and interior to the conduit. These monitoring systems 20 may be in communication with surface production platform 150 by any number of appropriate communication means, including fiber-optic cables (not shown) connecting assemblies 20 with the station. Herewith a monitoring capability, for instance for monitoring composition, is provided on wells and conduits that are otherwise not easily accessed or monitored without an associated high cost and/or having to halt or reduce production. As fluids are actively produced from the wells in a sub-sea environment, the fluids may be constantly monitored for the presence of problematic contaminants in the fluids, such as asphaltenes or polar molecules such as excess water, hydrogen sulfide, or sulfur dioxide.

The at least one measurement assembly may be mounted on conduits 162a, 162b, and 162c substantially close to the wellhead 161, or the tree 166. In accordance with further aspects of this embodiment, a plurality of assemblies 20 may be located along the length of conduits 162a, 162b and 162c so as to be able to analyze the fluid flowing within the conduit as a function of location within the conduit itself. In this manner, it would be possible to detect asphaltenes and similar heavy, polar molecules that have segregated in the hydrocarbon stream within a production pipeline, either at the bottom, top or middle of the production pipeline.

In one embodiment, as further illustrated in FIG. 7, each of the conduits 162a-c may be provided with a valve in the form of an isolation valve 163. A controller 165 may control the isolation valves 163. Each valve 163 may have its own dedicated controller, or several valves may share a single controller. The controller 165 is connected to the monitoring system 20, for instance via a direct connection with the monitoring system 20 or via a central remote processor, and programmed to control the valve 163 in response to the detection signal generated in the monitoring system 20.

Thus, based on the detection signal the flow of the hydrocarbon containing fluid through the conduit may be controlled. When, during operation, the detection signal contains an indication of an undesired property in the fluid that flows through the conduit, the isolation valve may be closed in response to that. For instance, the detection signal may reveal presence of water in the hydrocarbon fluid flow above a predetermined acceptable quantity. By closing the conduit containing the water, the reservoir to which it connects is isolated from the production tree 166 and this way the production of relatively uncontaminated mineral hydrocarbon containing fluids from the remaining reservoirs can be continued. The same may apply when hazardous components are detected in one of the conduits 162a to 162c, such as hydrogen sulfide.

As shown in FIG. 7, the isolation valves 163 are downstream of monitoring systems 20, but they may equally well be located upstream thereof.

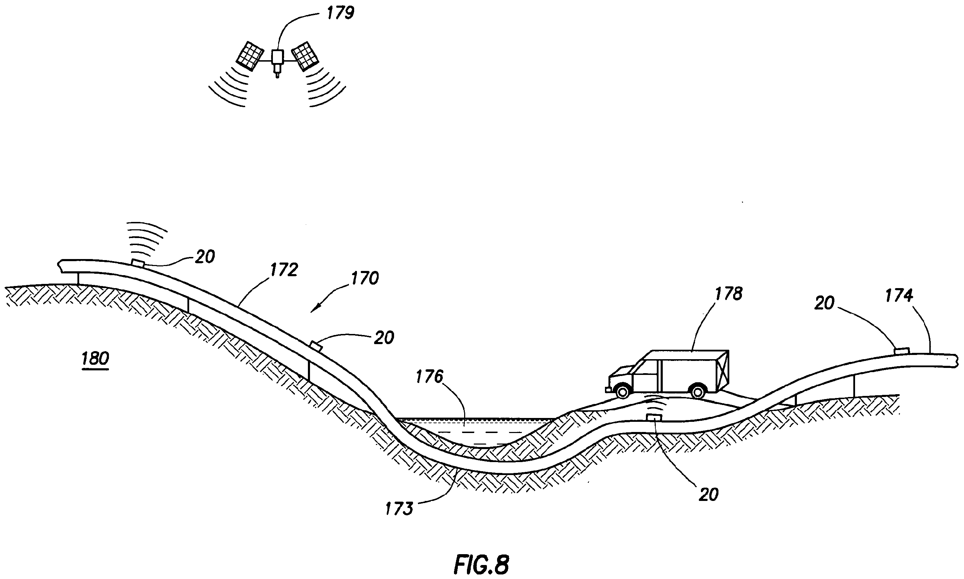

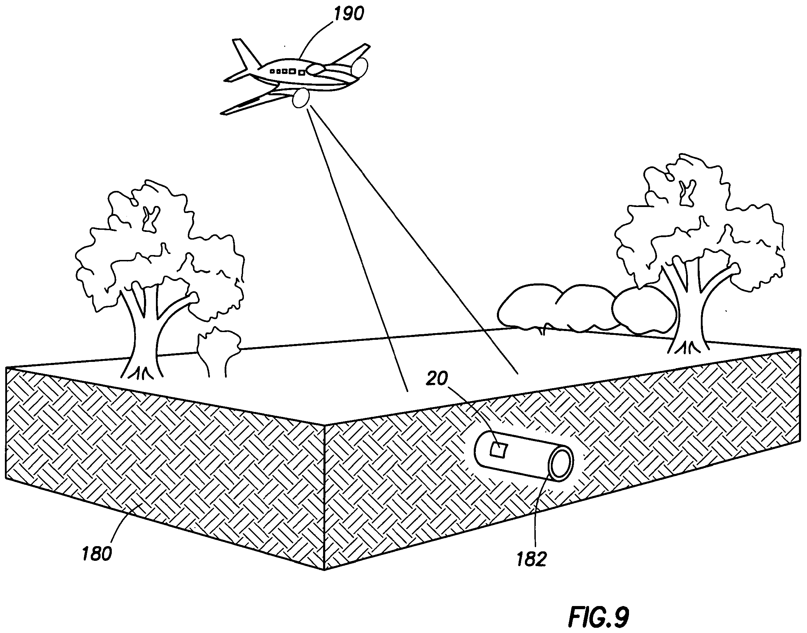

The embodiments illustrated above with reference to FIG. 7, may equally well be applied in other situations, including fluid conduits on land. The monitoring system and isolation valves may be in contact with a remote operator station via a so-called SCADA or e-SCADA system (supervisory control and data-acquisition system). Such an (e-)SCADA system may make use of web-based wireless technology including transmission via radio, cellular, or satellite, depending on the range. SCADA and e-SCADA have been employed in the field, as described in the article entitled "Field trial tests web-based wireless eSCADA" by Gordon Veitch et al, Oil & Gas Journal of 16 September, 2002. In examples illustrated in FIGs. 8 and 9, signals from monitoring systems 20 may be transmitted from a measurement assembly and be received by a remote receiver, for instance contained in a mobile interrogation device, such as an automotive device 178, a satellite device 179, or an airborne device 190. As illustrated in the embodiments shown therein, a fluid conduit 170 extends across terrain 180. As indicated previously, the term
fluid conduit, as used herein, means a closed circuit, such as a pipeline or other substantially tubular member, and an open conduit such as an aqueduct for transporting liquids such as water. Such conduits may extend for tens, hundreds, or thousands of kilometers and may be used to transport liquids, gases, slurries, or other fluids. The conduit 170, as illustrated in FIG. 8, may be a pipeline having multiple sections 172, 173, and 174 that run above or below ground. For example, sections such as section 173 may be run underground to avoid naturally occurring obstacles such as a river 176, or simply as a safety precaution. Other sections may be run above-ground, depending upon the topography and underlying strata. Self-contained measurement and information collection assemblies 20 may be disposed along the length of conduit 170 at predetermined locations to determine any of a number of parameters of interest related to the fluid transported within the conduit, and/or the operation and safety of the conduit itself, as described above in reference to FIG. 7. Due to the very nature of the length and locations of such conduits, interrogation devices such as the automotive, satellite, or airborne devices 178, 179 and 190, respectively, may be used in order to overcome the otherwise impractical and cost prohibitive use of power and signal lines to multiple monitoring systems 20.

The automotive device 178 in FIG. 8 may be any number of common vehicles, including but not limited to a truck, a car, or an all-terrain vehicle, including remotely controlled terrestrial vehicles. The airborne device 190 may be any number of common airborne devices, including but not limited to an airplane, a helicopter, or a balloon. In the instance that the airborne device is an airplane, the airplane may be manned or a remotely controlled, unpiloted aircraft. Referring to FIG. 9, remotely controlled aircraft device 190 may be pre-programmed to follow a predetermined flight pattern along the known path of fluid flow conduit 182, using, for example, pre-programmed way points and GPS signals to guide the aircraft device along the predetermined flight pattern. Satellite devices 179 in FIG. 8 may be any suitable satellite orbiting the Earth and capable of receiving and transmitting signals.

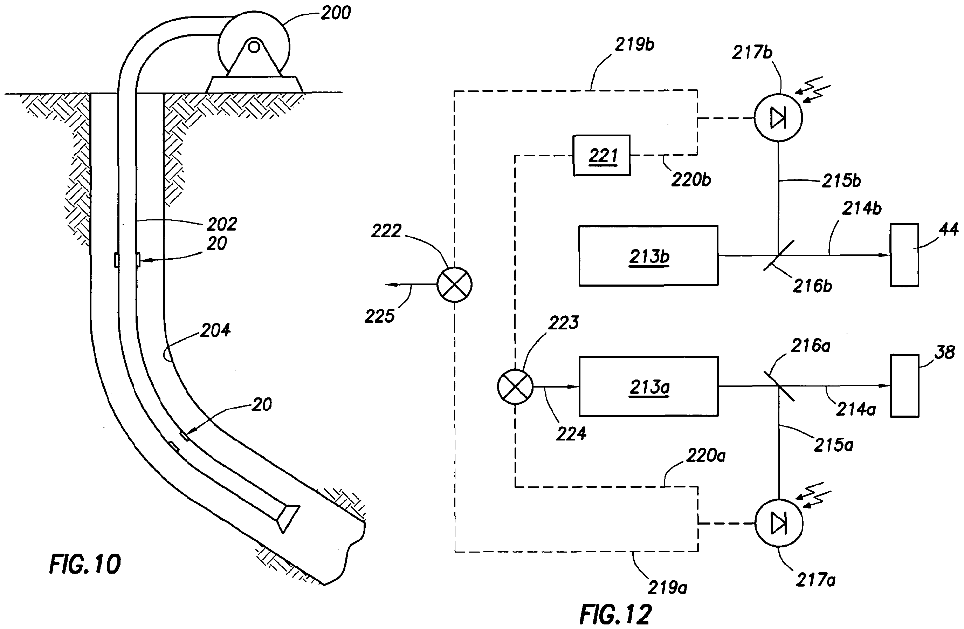

A further embodiment of the application of the systems and assemblies of the present invention is illustrated in FIG. 10. As shown therein, a composite conduit, such as described previously and having internal, external, or imbedded monitoring systems 20, which may be formed as a coiled tubing line 202 disposed downhole by way of a coiled-tubing deployment means 200, for use in drilling and/or completing a wellbore 204. Measurements from the monitoring systems 20 may be used to determine parameters of interest with regard to the downhole fluid properties, early in the production life of the wellbore, such as the presence of hydrogen sulfide and its general concentration.

The fluid conduits 162a to 162c as discussed with reference to FIG. 7 above may be located deep in an earth formation as is illustrated in FIG. 11. FIG. 11 schematically shows a so-called multilateral well, comprising of a wellbore 204 fluidly connected with conduits 206a, 206b, and 206c here provided in the form of branches of deviated holes extending into a producing zone in the earth formation 156. Although not shown, the multilateral well may be completed according to methods known in the art, whereby the deviated holes may be provided with production tubes and/or liners, and the wellbore 204 with casing tubes and/or production tubes. Each of the deviated holes 206a to 206c is provided with a monitoring device 20 and optionally with an isolation valve 163. Operation of the multilateral well is equal to that described with reference to FIG. 7, whereby one or more of the branches 206a to 206c may be isolated before the streams co-mingle. This way a mineral hydrocarbon fluid can be produced and monitored, and based on the detection signals from the monitoring systems 20 decisions may be taken on which branches to isolate. The system may also be provided with a telemetry system (not shown) to allow data transmission from the monitoring systems 20 and/or the isolation valves 163 to a data acquisition unit on the surface, and/or control signal transmission from a control device or an operator to the monitoring systems 20 and/or the isolation valves 163.

It may be desirable to avoid mechanical parts in the infrared optical system, in particular when operation of the system is envisaged in a downhole environment, such as is the case in FIG. 11, or in environment that is otherwise difficultly accessible, of which the embodiments of FIGs. 5 and 6 may be examples. The optical delay device employed above, e.g. at 36 in FIG. 3 or at 74 in FIG. 6, may comprise such mechanical parts.

The optical delay device 36 essentially imposes a variable time delay between the arrivals of the optical pulses at terahertz wave detector compared to the optical pulses arriving at the terahertz wave generator. Alternative techniques suitable for achieving such a variable delay may be employed instead. One such alternative technique is known as asynchronous optical sampling (ASOPS), and it may be preferred because it enables for fast scanning and it does not require a mechanical delay line.

To apply ASOPS in the infrared or terahertz domain analyzing device to make a spectroscopic measurement in the terahertz domain, there may be provided: a first pulsed light source 213a for generating an excitation light pulse train 214a at a first repetition rate; a terahertz wave generator 38 capable of generating a terahertz wave by using the excitation light pulse train 214a; a second pulsed light source 213b for generating a detection light pulse train 214b at a second repetition rate, the second repetition rate being shifted relative to the first repetition rate resulting in a varying phase shift between the excitation light pulse train 214a and the detection light pulse train 214b; and a terahertz wave detector 44 capable of detecting the terahertz wave by using the detection pulse train 214b.

Application of ASOPS in a terahertz spectrometer setup has been described in an article by A Bartels et al, titled "Ultrafast time-domain spectroscopy based on high-speed asynchronous optical sampling" published in Review of Scientific Instruments Vol. 78, 035107 (2007).

An optical delay device based on ASOPS is schematically depicted in FIG. 12. In essence, ASOPS uses two pulsed light sources 213a and 213b, here provided in the form of mode-locked pulsed lasers, each having a stable pulse repetition rate mutually linked with a slight frequency difference. The optical pulse train 214a from one of the lasers 213a is used to illuminate the terahertz generator 38, while the optical pulse train 214b from the other of the lasers 231b is used to illuminate the terahertz receiver 44. In the embodiments as disclosed in the article by Bartels, the lasers 213a and 213b provided in the form of Ti:sapphire femtosecond oscillators with a repetition rates of approximately 1 GHz. In one embodiment described in the article by Bartels *et al,* the repetition rate of one of the oscillators is 956 MHz, and that of the other is modified to be 10 kHz higher by adjusting a cavity mirror.

This results effectively in a varying phase shift between the excitation light pulse train 214a and the detection light pulse train 214b. Or, in other terms, the delay between pulses in the pulse train 214a arriving at the terahertz generator 38 and pulses in the pulse train 214b arriving at receiver 44 changes over time, due to the slight frequency difference. In terahertz applications, this allows for a relatively long time window to be scanned very quickly, without the use of any mechanical parts.

In example embodiments, splitters 216a and 216b are positioned in the beams containing the trains of laser pulses 214a and 214b, to split-off small portions of the beams to provide control beams 215a and 215b of pulse trains which can be used to generate trigger signals and feedback signals for adjusting the cavity mirror.

In the embodiment as shown in FIG. 12, the pulses in the control beams 215a and 215b are converted into electrical signals by means of photodiodes 217a and 217b. The photodiodes are selected fast enough such that the electrical signals additionally contain higher harmonics of the fundamental repetition frequency. The electrical signals are split is a fundamental branch 219a, 219b containing the fundamental frequency and a harmonic branch 220a,220b containing a harmonic frequency, e.g. a third harmonic frequency. The signal in one of the harmonic branches, 220b, is up-shifted by the harmonic factor (here: 3) times the desired frequency shift between the repetition rates of the two lasers, and phase locked with the signal in the other harmonic branch, 220a, by means of a double-balanced mixer 223 serving as a phase-difference detector. The adjusting of the cavity mirror of laser 213a is controlled by the feedback signal 224 from the double-balanced mixer 223, for instance by feeding the feedback signal to a piezoelectric transducer that supports the cavity mirror.

The signals from the fundamental branches 219a and 219b may be supplied to another double-balanced mixer 222, to generate a trigger signal 225 which may be used to trigger spectroscopic traces determined in the terahertz spectrometer, and to trigger other components such as digitizers.

It may also be advantageous to provide multiple terahertz detectors, optionally associated with multiple terahertz transmitters or with branches of the terahertz waves that have been split of from terahertz waves coming from a single transmitter. This may facilitate interpretation of the measurements, because one of the multiple terahertz detectors may for instance be used to measure a reference signal, e.g. of terahertz waves that have bypassed the fluid sample in the measurement portion. Alternatively, or in addition thereto, one or more of the multiple terahertz detectors may be used to measure terahertz waves that have been led over terahertz wave paths that extend over different path lengths through the fluid samples, which facilitates making a measurement of attenuation of the terahertz waves in the fluid samples. This may be achieved e.g. in the embodiments of FIGs. 5 and 6 by providing a plurality of orifices 50 with different window separations between windows 81a and 81b.

While the systems and assemblies described herein have focused on the use of infrared spectroscopy techniques, and more in particular on terahertz spectroscopy techniques, to analyze fluids within a fluid conduit such as a pipeline, it is also envisioned that these systems could be combined with a number of other systems in order to provide a fluid analysis assembly capable of measuring numerous properties of the fluid sampled. Such additional properties include, but are not limited to, pressure, volume, temperature, density, optical density and/or optical absorption at wavelengths ranging from about 300 nm to about 1000 nm, molecular-vibration absorption at wavelengths ranging from about 100 nm to about 200 nm, as well as combinations of such properties. For example, and referring to FIG. 6, it is envisioned that once the fluid has been measured by measuring the characteristics and composition properties of the fluid as it flows through orifice 50, the sample fluid flowing through fluid conduit could pass through one or more secondary analysis devices (not shown) housed contemporaneously with or separately from assembly 20. Such secondary analysis devices may include one or more devices that measure a variety of parameters of interest which include, but are not limited to, mechanical strain, corrosion, radiation, wall thickness of the conduit, micro-crack initiation and propagation within the conduit, and fluid flow rate.

In accordance with further aspects of the embodiments described herein, the assemblies and systems described are capable of monitoring fluid properties within a conduit not only on instantaneous or predetermined bases but for time periods ranging from about 1 day through the production life of the hydrocarbon producing well, which may be up to and include about 30 years.

After providing a wellbore extending through at least a portion of the earth formation, the mineral hydrocarbon containing fluid may be produced from the producing zone allowed to flow though a conduit fluidly connected to the wellbore. A detection signal may be generated in accordance with the present specification and monitored over time.

Such monitoring may also include time periods ranging for periods between 1 day and 30 years, including weeks and months falling between this time period. In accordance with this latter aspect, determining and monitoring fluid characteristics within a conduit over an extended period of time (e.g., days, weeks, months or years) may allow for the creation of a database of data/data history associated with the respective conduits. This database may in turn be used to continuously monitor the fluids flowing through the conduit using any number of known, statistical-based monitoring systems which allow the user to quickly spot and investigate data points that are outside of the historical "normal" measurement data range.

While compositions and methods have been described in terms of "comprising" various components or steps (interpreted as meaning "including, but not limited to"), the compositions and methods may also "consist essentially of" or "consist of" the various components and steps, such terminology should be interpreted as defining essentially closed-member groups.

The invention has been described in the context of preferred and other embodiments and not every embodiment of the invention has been described. Obvious modifications and alterations to the described embodiments are available to those of ordinary skill in the art. The disclosed and undisclosed embodiments are not intended to limit or restrict the scope or applicability of the invention conceived of by the Applicants, but rather, in conformity with the patent laws, Applicants intends to protect all such modifications and improvements to the full extent that such falls within the scope of the following claims.

## Claims

1. A system for monitoring a hydrocarbon-containing fluid flowing through a conduit, the system comprising:
a wellbore (204) that extends through at least a portion of an earth formation for allowing the hydrocarbon-containing fluid to flow from a producing zone of the earth formation in said wellbore;
a conduit (10) fluidly connected to the wellbore; and
a measurement assembly (30) comprising:
a terahertz probe wave generator (38) arranged to generate a terahertz probe wave with a frequency between 50 GHz and 30 THz;
a terahertz probe wave detector (44) arranged to detect at least a portion of the terahertz probe wave and generate detection signal;
a terahertz probe wave path that extends between the terahertz probe wave generator and the terahertz probe wave detector, whereby at least a section of the terahertz probe wave path extends into the conduit (10);
wherein the hydrocarbon containing fluid is a mineral hydrocarbon containing fluid and the system (20) further comprises:
a processor (29) programmed to extract from the detection signal at least one fluid parameter selected from the group consisting of asphaltene content, asphaltene type, water content, hydrogen sulfide content, sulfur dioxide content, gas to oil ratio, and condensate gas ratio;
a valve (163) on the conduit (10) capable of controlling the flow of the mineral hydrocarbon containing fluid through the conduit (10); and
a controller (165) arranged to control the valve (163), whereby the controller (165) is coupled to the terahertz probe wave detector (44) and programmed to control the valve (163) in response to the detection signal.

2. The system of claim 1, wherein the valve (163) is located downhole in the earth formation (156).

3. The system of claim 1, wherein the terahertz probe wave generator (38) and the terahertz probe wave detector (44) form part of a terahertz domain analyzing device.

4. The system of claim 1, wherein the terahertz probe wave generator (38) comprises:
a pulsed light source (32) for generating an excitation light pulse (31); and
wherein the terahertz probe wave generator (38) is capable of generating terahertz waves by using the excitation light pulse (31); and wherein the terahertz probe wave detector (44) is capable of detecting the terahertz wave.

5. The system of claim 4, wherein at least one of the terahertz probe wave generator (38) and the terahertz probe wave detector (44) is constructed from an optical switching device (38a, 44a) .

6. The system of any one of claims 1 to 5, wherein the measurement assembly is coupled to the exterior (12) of the conduit (10).

7. The system of any one of claims 1 to 5, wherein the measurement assembly (30) is coupled to the interior (14) of the conduit (10).

8. The system of any one of claims 1 to 7, further comprising a monitoring signal transmitter (26) capable of transmitting a monitoring signal from the measurement assembly (30) to a remote receiver capable of receiving the monitoring signal.

9. The system of any one of claims 1 to 8, comprising a plurality of said measurement assemblies at a plurality of locations along a length or circumference of the conduit.

10. The system of any one of claims 3 or 4 to 10 when dependent on claim 3, wherein the terahertz domain analyzing device is a terahertz domain spectrometer.

## Patentansprüche

1. System zum Überwachen eines Kohlenwasserstoff enthaltenden Fluids, das durch eine Rohrleitung fließt, wobei das System umfasst:
ein Bohrloch (204), das sich durch mindestens einen Teil einer Erdformation erstreckt, um es zu ermöglichen, dass das Kohlenwasserstoff enthaltende Fluid von einer Förderzone der Erdformation in das Bohrloch fließt;
eine Rohrleitung (10), die sich in Fluidverbindung mit dem Bohrloch befindet; und
eine Messanordnung (30), umfassend:
einen Terahertzsondenwellengenerator (38), der angeordnet ist, um eine Terahertzsondenwelle mit einer Frequenz zwischen 50 GHz und 30 THz zu erzeugen;
einen Terahertzsondenwellendetektor (44), der angeordnet ist, um mindestens einen Teil der Terahertzsondenwelle zu detektieren und ein Detektionssignal zu erzeugen;
einen Terahertzsondenwellenpfad, der sich zwischen dem Terahertzsondenwellengenerator und dem
Terahertzsondenwellendetektor erstreckt, wobei sich mindestens ein Abschnitt des Terahertzsondenwellenpfads in die Rohrleitung (10) erstreckt;
wobei es sich bei dem Kohlenwasserstoff enthaltenden Fluid um ein Mineralkohlenwasserstoff enthaltendes Fluid handelt und das System (20) ferner umfasst:
einen Prozessor (29), der programmiert ist, um mindestens einen Fluidparameter, ausgewählt aus der Gruppe bestehend aus dem Asphaltengehalt, dem Asphaltentyp, dem Wassergehalt, dem Hydrogensulfidgehalt, dem Schwefeldioxidgehalt, dem Gaszu-Öl-Verhältnis und dem Kondensat-Gas-Verhältnis, aus dem Detektionssignal zu extrahieren;
ein Ventil (163) an der Rohrleitung (10), das zum Steuern des Flusses des Mineralkohlenwasserstoff enthaltenden Fluids durch die Rohrleitung (10) in der Lage ist; und
eine Steuerung (165), die angeordnet ist, um das Ventil (163) zu steuern, wobei die Steuerung (165) mit dem Terahertzsondenwellendetektor (44) verbunden und programmiert ist, um das Ventil (163) als Reaktion auf das Detektionssignal zu steuern.

2. System nach Anspruch 1, wobei sich das Ventil (163) unter Tage in der Erdformation (156) befindet.

3. System nach Anspruch 1, wobei der Terahertzsondenwellengenerator (38) und der Terahertzsondenwellendetektor (44) einen Teil einer Terahertz-Bereich-Analysevorrichtung bilden.

4. System nach Anspruch 1, wobei der Terahertzsondenwellengenerator (38) umfasst:
eine Quelle von gepulstem Licht (32) zum Erzeugen eines Anregungslichtimpulses (31); und
wobei der Terahertzsondenwellengenerator (38) durch Verwendung des Anregungslichtimpulses (31) zum Erzeugen von Terahertzwellen in der Lage ist; und wobei der Terahertzsondenwellendetektor (44) zum Detektieren der Terahertzwelle in der Lage ist.

5. System nach Anspruch 4, wobei der Terahertzsondenwellengenerator (38) und/oder der Terahertzsondenwellendetektor (44) aus einer optischen Schaltvorrichtung (38a, 44a) konstruiert ist/sind.

6. System nach einem der Ansprüche 1 bis 5, wobei die Messanordnung mit dem Äußeren (12) der Rohrleitung (10) verbunden ist.

7. System nach einem der Ansprüche 1 bis 5, wobei die Messanordnung (30) mit dem Inneren (14) der Rohrleitung (10) verbunden ist.

8. System nach einem der Ansprüche 1 bis 7, ferner umfassend einen Überwachungssignalsender (26), der in der Lage ist, ein Überwachungssignal von der Messanordnung (30) zu einem entfernen Empfänger zu senden, der zum Empfangen des Überwachungssignals in der Lage ist.

9. System nach einem der Ansprüche 1 bis 8, umfassend mehrere der Messanordnungen an mehreren Orten entlang einer Länge oder eines Umfangs der Rohrleitung.

10. System nach einem der Ansprüche 3 oder 4 bis 10, wenn abhängig von Anspruch 3, wobei es sich bei der Terahertz-Bereich-Analysevorrichtung um ein Terahertz-Bereich-Spektrometer handelt.

## Revendications

1. Système de surveillance d'un fluide contenant des hydrocarbures s'écoulant à travers un conduit, le système comprenant :
un puits de forage (204) qui s'étend à travers au moins une partie d'une formation terrestre pour permettre au fluide contenant des hydrocarbures de s'écouler à partir d'une zone de production de la formation terrestre dans ledit puits de forage ;
un conduit (10) pouvant être relié de manière fluidique au puits de forage ; et
un ensemble de mesure (30) comprenant :
un générateur d'onde de sonde térahertz (38) agencé pour générer une onde de sonde térahertz avec une fréquence comprise entre 50 GHz et 30 THz ;
un détecteur d'onde de sonde térahertz (44) agencé pour détecter au moins une partie de l'onde de sonde térahertz et générer un signal de détection ;
un trajet d'onde de sonde térahertz qui s'étend entre le générateur d'onde de sonde térahertz et le détecteur d'onde de sonde térahertz, moyennant quoi au moins une section du trajet d'onde de sonde térahertz s'étend dans le conduit (10) ;
le fluide contenant des hydrocarbures étant un fluide contenant des hydrocarbures minéraux et le système (20) comprenant en outre :
un processeur programmé pour extraire du signal de détection au moins un paramètre de fluide choisi dans le groupe comprenant la teneur en asphaltènes, le type d'asphaltènes, la teneur en eau, la teneur en sulfure d'hydrogène, la teneur en dioxyde de soufre, le rapport gaz/huile et le rapport condensat/gaz ;
une vanne (163) sur le conduit (10) capable de commander l'écoulement du fluide contenant des hydrocarbures minéraux à travers le conduit (10) ; et
un dispositif de commande (165) agencé pour commander la vanne (163), moyennant quoi le dispositif de commande (165) est couplé au détecteur d'onde de sonde térahertz (44) et programmé pour commander la vanne (163) en réponse au signal de détection.

2. Système selon la revendication 1, la vanne (163) étant située en fond de trou dans une formation terrestre (156).

3. Système selon la revendication 1, le générateur d'onde de sonde térahertz (38) et le détecteur d'onde de sonde térahertz (44) faisant partie d'un dispositif d'analyse de domaine térahertz.

4. Système selon la revendication 1, le générateur d'onde de sonde térahertz (38) comprenant :
une source de lumière pulsée (32) pour générer une impulsion de lumière d'excitation (31) ; et
le générateur d'onde térahertz (38) étant capable de générer des ondes térahertz en utilisant l'impulsion de lumière d'excitation (31) ; et le détecteur d'onde térahertz (44) étant capable de détecter l'onde térahertz.

5. Système selon la revendication 4, au moins l'un parmi le générateur d'onde térahertz (38) et le détecteur d'onde térahertz (44) étant construit à partir d'un dispositif de commutation optique (38a, 44a) .

6. Système selon l'une quelconque des revendications 1 à 5, l'ensemble de mesure étant couplé à l'extérieur (12) du conduit (10).

7. Système selon l'une quelconque des revendications 1 à 5, l'ensemble de mesure (30) étant couplé à l'intérieur (14) du conduit (10).

8. Système selon l'une quelconque des revendications 1 à 7, le système comprenant en outre un émetteur de signal de surveillance (26) capable d'émettre un signal de surveillance à partir de l'ensemble de mesure (30) vers un récepteur distant capable de recevoir le signal de surveillance.

9. Système selon l'une quelconque des revendications 1 à 8, comprenant une pluralité desdits ensembles de mesure au niveau d'une pluralité d'emplacements le long d'une longueur ou d'une circonférence du conduit.

10. Système selon l'une quelconque des revendications 3 ou 4 à 10 si elle dépend de la revendication 3, le dispositif d'analyse de domaine térahertz étant un spectromètre de domaine térahertz.
